# EUROPÄISCHE PATENTSCHRIFT

(11) **EP 4 222 405 B1**
(45) Veröffentlichungstag und Bekanntmachung des Hinweises auf die Patenterteilung: **26.11.2025**
(21) Anmeldenummer: 21786320.8
(22) Anmeldetag: 24.09.2021
(51) Int. Cl.: F17C 13/00

(54) **SICHERHEITSENTNAHMESYSTEM FÜR EINEN KRYOBEHÄLTER**
SAFETY REMOVAL SYSTEM FOR A CRYOGENIC CONTAINER
SYSTÈME DE PRÉLÈVEMENT DE SÉCURITÉ POUR RÉCIPIENT CRYOGÉNIQUE

(30) Priorität: 29.09.2020 AT 5019020 U
(43) Veröffentlichungstag der Anmeldung: 09.08.2023
(73) Patentinhaber: Cryoshelter LH2 GmbH, 8143 Dobl-Zwaring (AT); Cryoshelter BioLNG GmbH, 8143 Dobl-Zwaring (AT)
(72) Erfinder: REBERNIK, Matthias, 8143 Dobl-Zwaring (AT)
(74) Vertreter: Schwarz & Partner Patentanwälte GmbH
(86) Internationale Anmeldenummer: PCT/AT2021/060346
(87) Internationale Veröffentlichungsnummer: WO 2022/067362

(56) Entgegenhaltungen:
- EP-A1- 3 236 132
- EP-A1- 3 489 061
- WO-A1-2016/126958
- DE-A1- 102017 208 807
- DE-A1- 102019 129 725
- US-A1- 2014 251 479
- US-A1- 2019 383 236

## Beschreibung

Die Erfindung betrifft ein Sicherheitsentnahmesystem, umfassend einen Kryobehälter, eine Entnahmeleitung und einen zwischen der Entnahmeleitung und dem Kryobehälter befindlichen Economizer zur Entnahme von Kryofluid in Flüssigphase und in Gasphase.

Gemäß dem Stand der Technik können verflüssigte Gase in Behältern ("Kryobehältern") gespeichert werden, um diese als Kraftstoff für beispielsweise einen Motor zu lagern. Verflüssigte Gase sind Gase, die bei Siedetemperatur im flüssigen Aggregatzustand vorliegen, wobei die Siedetemperatur dieses Fluids druckabhängig ist. Wird eine solche kryogene Flüssigkeit in einen Kryobehälter gefüllt, so stellt sich, abgesehen von thermischen Wechselspielen mit dem Kryobehälter selbst, ein Druck entsprechend der Siedetemperatur ein.

Aus dem Stand der Technik ist weiters bekannt, mechanische Economizer zur Entnahme von Kryofluid aus dem Kryobehälter vorzusehen, wie beispielsweise in der EP 3 489 061 A1 und der EP 3 489 062 A1 beschrieben ist. Derartige Economizer sind über zwei Anschlussleitungen mit dem Kryobehälter verbunden, von denen eine Kryofluid in der Flüssigphase und die andere Kryofluid in der Gasphase aus dem Kryobehälter entnimmt. Mittels mechanischen Ventilen in den beiden Anschlussleitungen kann der Economizer das Verhältnis von entnommener Flüssigphase zu entnommener Gasphase steuern. Beispielsweise kann im Normalfall Flüssigphase aus dem Kryobehälter entnommen und dem Motor zugeführt werden, wobei Gasphase erst dann aus dem Kryobehälter entnommen und dem Motor zugeführt wird, wenn der Druck im Kryobehälter einen Schwellwert übersteigt. Dadurch kann der Druck im Kryobehälter wirtschaftlich und umweltschonend reduziert werden, ohne Gas zur Druckreduktion einfach aus dem Kryobehälter auszulassen.

Die beiden vorgenannten Schriften EP 3 489 061 A1 und EP 3 489 062 A1 beschreiben weiters, dass stromabwärts des Economizers ein Ventil in der Entnahmeleitung vorgesehen sein kann, das über einen Not-Aus Schalter schließbar ist.

Die EP 3 236 132 A1 beschreibt ein System mit einem Kryobehälter, wobei zwischen dem Kryobehälter und der Entnahmeleitung ein Economizer mit zwei ansteuerbaren Ventilen angeordnet ist. Die Steuereinrichtung, die zur Ansteuerung der Ventile vorgesehen ist, kann in einem Schaltzustand beide Ventile schließen, z.B. im Falle eines Unfalls.

Weitere Economizer sind beispielsweise aus den Schriften WO2016172803A1, US4406129A, US2017159611A1 und DE102019129725A1 bekannt.

Es versteht sich, dass aufgrund der hohen Drücke im Kryobehälter ein Bedürfnis besteht, besondere Sicherheitsvorkehrungen vorzusehen. Deshalb werden im Stand der Technik beispielsweise zwei zusätzliche Ventile in der Entnahmeleitung hinter dem mechanischen Economizer vorgesehen. Das erste, direkt auf den mechanischen Economizer folgende Ventil ist ein händisch betätigbares Ventil, das beispielsweise unmittelbar neben dem Kryobehälter zugänglich ist. Derartige händisch betätigbare Ventile werden im Stand der Technik gefordert, damit ein Benutzer die Verbindung des Kryobehälters zum Motor unmittelbar kappen kann, wenn dieser ein Problem, wie einen Überdruck, feststellt.

Überdies wird ein von einer Motorzündung angesteuertes, stromlos geschlossenes Ventil in der Entnahmeleitung angeordnet, sodass die Entnahmeleitung ständig geschlossen ist, wenn es nicht von der Zündung angesteuert ist.

Dieses System hat sich zwar in der Praxis bewährt, nimmt jedoch einen großen Bauraum an der Fahrzeugseite ein. Ein einfaches Weglassen eines der beiden Ventile würde zwar den benötigten Platz für die Armaturen reduzieren, führt jedoch gleichzeitig zu einer Reduktion des Sicherheitslevels.

Es ist daher die Aufgabe der Erfindung, den benötigten Platzbedarf für die Sicherheitsarmaturen zu reduzieren und gleichzeitig ein zumindest gleichhohes Sicherheitslevel zu gewährleisten.

Diese Aufgabe wird gelöst durch ein Sicherheitsentnahmesystem, umfassend einen Kryobehälter, eine Entnahmeleitung und einen zwischen der Entnahmeleitung und dem Kryobehälter befindlichen Economizer zur Entnahme von Kryofluid in Flüssigphase und in Gasphase, wobei der Economizer als elektrischer Economizer mit zwei ansteuerbaren Ventilen ausgebildet ist, die jeweils eine Entnahme der Flüssigphase oder der Gasphase aus dem Kryobehälter sperren können, weiters umfassend eine Steuereinrichtung zur Ansteuerung der Ventile, und wobei das System ferner einen Not-Aus Schalter umfasst, welcher mit den beiden stromlos geschlossenen Ventilen des elektrischen Economizers verbunden und dazu ausgebildet ist, bei Betätigung die Entnahme von Kryofluid durch beide Ventile gleichzeitig zu sperren, wobei der Not-Aus Schalter ein manuell betätigbarer Not-Aus Schalter ist und/oder wobei das Sicherheitsentnahmesystem ferner eine mit dem Not-Aus Schalter verbundene Steuereinheit umfasst, welche dazu ausgebildet ist, einen Unfall zu detektieren und den Not-Aus Schalter bei Detektion eines Unfalles zu betätigen. Weiters sind die Ventile jeweils als stromlos geschlossene Ventile ausgeführt und die Ventile sind immer geschlossen, wenn kein Signal vom Not-Aus Schalter vorliegt und je nach Ansteuerung durch die Steuereinrichtung geschlossen oder offen, wenn ein Signal vom Not-Aus Schalter an den Ventilen anliegt.

Die Erfindung besteht darin, dass auf das manuell betätigbare Ventil in der Entnahmeleitung verzichtet wird und im Gegenzug ein neuartiger manueller bzw. automatischer Entnahmestopp für Notfallsituationen erzielt wird. Zu diesem Zweck wurde der üblicherweise nicht mit Sicherheitsfunktionen im Zusammenhang stehende Economizer modifiziert, sodass dieser nun auch eine manuell zuschaltbare oder bei Detektion eines Unfalls automische Sperrfunktion übernehmen kann. Um die Entnahme von Kryofluid aus dem Kryobehälter manuell bzw. bei Detektion eines Unfalls automisch zu stoppen, wird ein neu konzipierter Not-Aus Schalter vorgesehen, der die Entnahme von Kryofluid durch die Entnahmeleitung stoppt, indem dieser die nun als stromlos geschlossen ausgebildeten Ventile des Economizers bei Betätigung schließt.

Es müssen somit weniger strukturelle Komponenten in der Entnahmeleitung angeordnet werden, wodurch der benötigte Platzbedarf reduziert wird. Das Sicherheitslevel des erfindungsgemäßen Systems wird jedoch zumindest gleich groß gehalten, da die Ventile des elektrischen Economizers durch ihre Ausgestaltung als stromlos geschlossene Ventile zusätzliche Sicherheitsfunktionen erfüllen können.

Ein enormer Vorteil bei der vorliegenden Erfindung ist zudem, dass die beiden Ventile des Economizers gleichzeitig gesperrt werden und nicht durch ein menschliches oder technisches Versagen nur eines der Ventile gesperrt wird.

In einer bevorzugten Ausführungsform umfasst das Sicherheitsentnahmesystem ein von einer Motorzündung angesteuertes, stromlos geschlossenes Ventil in der Entnahmeleitung, wobei der Not-Aus Schalter sowohl mit dem von der Motorzündung angesteuerten Ventil als auch mit den beiden stromlos geschlossenen Ventilen des elektrischen Economizers verbunden und dazu ausgebildet ist, bei Betätigung die Entnahme von Kryofluid durch alle drei Ventile gleichzeitig zu sperren. Dadurch kann das Sicherheitslevel sogar noch weiter erhöht werden, da das manuelle bzw. automatische Verschließen der Entnahmeleitung redundant erfolgt.

In einer bevorzugten Ausführungsform der Erfindung ist der Not-Aus Schalter am Kryobehälter oder in einer Fahrerkabine angeordnet. Alternativ dazu kann der Not-Aus Schalter unmittelbar neben einer Befüllkupplung oder einer Druckanzeige angeordnet sein. Wenn der erstgenannte Not-Aus Schalter nicht in der Fahrerkabine angeordnet ist, kann bevorzugt ein weiterer, bevorzugt in einer Fahrerkabine angeordneter, Not-Aus Schalter vorgesehen sein, der mit dem von der Motorzündung angesteuerten Ventil und den beiden stromlos geschlossenen Ventilen des elektrischen Economizers verbunden und dazu ausgebildet ist, bei Betätigung die Entnahme durch alle drei Ventile zu sperren.

In einer weiteren bevorzugten Ausführungsform umfasst das Sicherheitsentnahmesystem eine Anschlussleitung zu einem weiteren Kryobehälter, die an der Entnahmeleitung stromabwärts des stromlos geschlossenen Ventils in einem Knotenpunkt anschließt, und ein Rückschlagventil, das stromabwärts des elektrischen Economizers und stromaufwärts des Knotenpunktes angeordnet ist und einen Fluss von Kryofluid in Richtung des Kryobehälters unterbindet. Durch das oben beschriebene Sperren der stromlos geschlossenen Ventile des elektrischen Economizers und des stromlos geschlossenen Ventils der Motorzündung kann wie bereits zuvor beschrieben eine Redundanz zum Sperren der Entnahme von Kryofluid in Richtung des Motors erzielt werden. Wenn jedoch die Entnahmeleitungen von zwei Kryobehältern über die Anschlussleitung verbunden sind, kann es auch zu einem negativen Differenzdruck kommen, d.h. der Druck in der Entnahmeleitung ist größer als im Kryobehälter. Wenn dieser negative Differenzdruck zu groß wird, kann dieser - beim Versagen des auch durch die Motorzündung gesteuerten Ventils - die durch den Not-Aus Schalter geschlossenen Ventile des elektrischen Economizers aufdrücken, insbesondere wenn diese als Überdruckventile ausgeführt sind. Um eine vollständige Redundanz in beide Richtungen der Entnahmeleitung zu schaffen, wird daher wie eingangs beschrieben ein Rückschlagventil in der Entnahmeleitung angeordnet.

Besonders bevorzugt ist die Steuereinheit dazu ausgebildet, einen Unfall durch Erhalt eines entsprechenden Steuersignals einer Fahrzeugelektronik und/oder durch Erhalt eines entsprechenden Sensorsignals eines mit der Steuereinheit verbundenen Sensors zu detektieren. Unter einem Unfall wird hierin ein allgemeines technisches Gebrechen des Fahrzeugs verstanden, auf dem der Kryobehälter mit dem Entnahmesystem montiert ist. Das Steuersignal der Fahrzeugelektronik kann beispielsweise ein Messwert sein, der auf einen Fahrzeugbrand oder einen drohenden Fahrzeugbrand schließen lässt (Temperatursignal) oder eine Überhitzung von Komponenten in der kritischen Umgebung des Tanksystems schließen lässt. Es versteht sich jedoch, dass moderne Fahrzeugelektroniken Unfälle bzw. technische Gebrechen insbesondere auch durch komplexe Analysen durchführen können, sodass die Wahl des Steuersignals nicht eingeschränkt zu verstehen ist.

Die Steuereinheit muss jedoch kein Steuersignal von einer Fahrzeugelektronik erhalten, sondern könnte einen Unfall auch autark detektieren. In diesem Fall kann der mit der Steuereinheit verbundene Sensor beispielsweise ein Beschleunigungssensor, ein Temperatursensor zur Bestimmung der Umgebungstemperatur oder ein Drucksensor zur Bestimmung eines Innendrucks des Kryobehälters sein und ein Unfall wird detektiert, wenn ein vom Sensor gemessener Messwert einen vorbestimmten Schwellwert überschreitet oder unterschreitet.

Zusätzlich kann die Steuereinheit dazu ausgebildet sein, einen Betriebsmodus eines Fahrzeugs (d.h. des Fahrzeuges, auf dem das Sicherheitsentnahmesystem montiert ist) zu detektieren und eine Entnahme von Kryofluid nur dann zu ermöglichen, wenn das Fahrzeug in Betrieb ist und/oder wenn eine sichere Entnahme von Kryofluid gewährleistet ist. Die Steuereinheit kann die Ventile des Economizers somit regelmäßig geschlossen halten und nur dann einen Kryofluiddurchgang freigeben, wenn das Fahrzeug in Betrieb ist, worunter verstanden wird, dass die Steuereinheit ein entsprechendes Steuersignal von einer Fahrzeugelektronik erhält. Alternativ oder zusätzlich kann die Steuereinheit nur dann einen Kryofluiddurchgang freigeben, wenn eine sichere Entnahme von Kryofluid gewährleistet ist, worunter hierin verstanden wird, dass die Steuereinheit Messdaten (z.B. Kryobehälterinnentemperatur, Kryobehälterinnendruck, Motortemperatur und/oder Betriebsbereitschaftssignal der Fahrzeugelektronik) von zumindest einem Sensor erhält und nach einem Schwellwertabgleich erkennt, dass bei der Entnahme von Kryofluid keine Sicherheitsbedenken bestehen.

Eine weitere Ausführungsform sieht vor, dass zwei Kryobehälter mit jeweils eigenen Entnahmesystemen auf dem Fahrzeug montiert sind, was regelmäßig der Fall sein kann, wenn ein Kryobehälter links am Fahrzeugrahmen und ein Kryobehälter rechts am Fahrzeugrahmen montiert ist, gesehen in Fahrtrichtung. Einer der Kryobehälter könnte beispielsweise auch hinter dem Fahrerhaus oder auf dem Dach angeordnet sein. Es könnten auch mehr als zwei Kryobehälter vorgesehen werden, die an den genannten Stellen montiert sein könnten. In diesen Fällen wurde bisher vorgesehen, dass für jeden der Kryobehälter ein eigenes manuell betätigbares Ventil in der jeweiligen Entnahmeleitung vorgesehen ist. Bei einem Notfall musste der Benutzer somit um das Fahrzeug herumlaufen, um beide Ventile manuell zu schließen und die Entnahme von Kryofluid aus beiden Kryobehältern zu verhindern. Erfindungsgemäß wird nun vorgesehen, das vorgenannte Sicherheitsentnahmesystem zu verdoppeln, wobei der Not-Aus Schalter alle Ventile beider Economizer gleichzeitig verschließen kann. Durch eine einzige Betätigung kann der Not-Aus Schalter somit nicht nur die Entnahme an dem nächstgelegenen Kryobehälter verhindern, sondern auch die Entnahme aus dem Kryobehälter auf der gegenüberliegenden Fahrzeugseite. Es können auch zwei derartige Not-Aus Schalter vorgesehen werden, wobei einer auf der einen Fahrzeugseite und der andere auf der anderen Fahrzeugseite angeordnet ist. Gegebenenfalls kann ein zusätzlicher Not-Aus Schalter in der Fahrerkabine oder außen an der Fahrerkabine angebracht sein. Unabhängig davon, auf welcher Fahrzeugseite sich der Benutzer damit befindet, kann er jeweils die Entnahme aus beiden Kryobehältern stoppen, ohne einen großen Weg zurücklegen zu müssen.

In der letztgenannten Ausführungsform kann das Sicherheitsentnahmesystem ferner von einer Motorzündung angesteuerte, stromlos geschlossene Ventile in der Entnahmeleitung und in der weiteren Entnahmeleitung umfassen, wobei der Not-Aus Schalter sowohl mit den beiden von der Motorzündung angesteuerten Ventilen als auch mit den vier stromlos geschlossenen Ventilen der elektrischen Economizers verbunden und dazu ausgebildet sein, bei Betätigung die Entnahme von Kryofluid durch alle sechs Ventile gleichzeitig zu sperren.

In weiteren Aspekten betrifft die Erfindung ein Fahrzeug, auf dem das Sicherheitsentnahmesystem nach einer der oben genannten Ausführungsformen montiert ist, wobei der Kryobehälter bevorzugt auf einem Fahrzeugrahmen seitlich am Fahrzeug montiert ist. Das Fahrzeug weist bevorzugt eine Fahrerkabine auf und der Kryobehälter ist hinter der Fahrerkabine angeordnet, beispielsweise wie bereits beschrieben seitlich am Fahrzeug am Fahrzeugrahmen oder mittig am Fahrzeug unmittelbar hinter der Fahrerkabine. Der Kryobehälter könnte auch auf einem Fahrzeugdach montiert sein.

Vorteilhafte und nicht einschränkende Ausführungsformen der Erfindung werden nachfolgend anhand der Zeichnungen näher erläutert.
Figur 1 zeigt ein Sicherheitsentnahmesystem für einen Kryobehälter gemäß dem Stand der Technik.
Figur 2 zeigt ein erfindungsgemäßes Sicherheitsentnahmesystem für einen Kryobehälter.

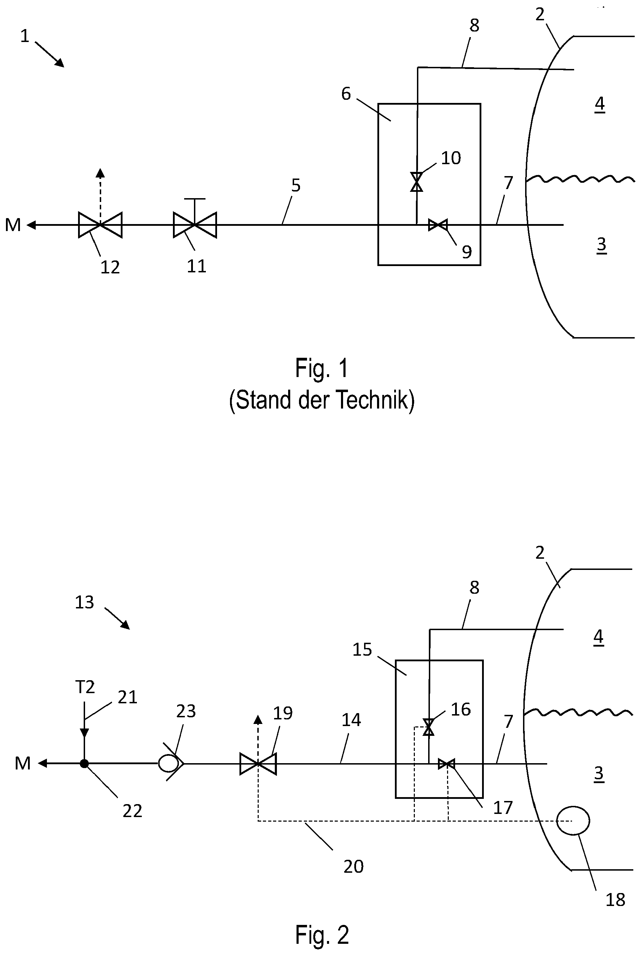

Figur 1 zeigt ein Sicherheitsentnahmesystem 1 gemäß dem Stand der Technik, umfassend einen Kryobehälter 2 zur Speicherung von Kryofluid 3. Der Kryobehälter 2 wird üblicherweise auf einem Fahrzeug, insbesondere auf einem Lastkraftwagen, mitgeführt und dient als Kraftstofftank. Das im Kryobehälter 2 gelagerte Kryofluid kann somit als Kraftstoff eingesetzt werden. Das Kryofluid, beispielsweise LNG (Liquid Natural Gas), liegt im Kryobehälter 2 sowohl in einer Flüssigphase 3 als auch in einer Gasphase 4 vor. Das dem Kryobehälter gelagerte Kryofluid kann in der Folge einem nicht im Detail dargestellten Motor M über eine Entnahmeleitung 5 zugeführt werden.

Bei der erfindungsgemäßen Anwendung könnte das Kryofluid beispielsweise auch Wasserstoff sein, sodass der Kryobehälter 2 ein Wasserstoffbehälter ist, oder das Kryofluid kann wie bereits erwähnt LNG (Liquefied Natural Gas) sein, sodass der Kryobehälter ein LNG-Behälter ist. Je nach Kryofluid ist der Kryobehälter somit dazu ausgelegt, Kryofluid bei Temperaturen von beispielsweise unter 150 Kelvin, im Fall von Wasserstoff sogar von unter 50 Kelvin oder unter 30 Kelvin oder im Wesentlichen 20 Kelvin, zu lagern. Je nach Anwendung könnte der Kryobehälter 2 beispielsweise zur Lagerung von sLH2 (subcooled liquid hydrogen) oder CcH2 (cryo-compressed hydrogen) ausgebildet und damit auch für entsprechende hohe Drücke ausgelegt sein, z.B. für Maximaldrücke zwischen 5 bar und 350 bar. Ist das Kryofluid Wasserstoff, kann der Motor M als Brennstoffzelle ausgeführt werden. Im Allgemeinen könnte der Motor daher auch als Verbraucher bezeichnet werden.

Zur Entnahme des Kryofluids aus dem Kryobehälter 2 weist das Sicherheitsentnahmesystem 1 einen zwischen dem Kryobehälter 2 und der Entnahmeleitung 5 angeordneten mechanischen Economizer 6 auf. Der mechanische Economizer 6 ist mit zwei Anschlussleitungen 7, 8 in den Kryobehälter 2 geführt, um mit der ersten Anschlussleitung 7 Kryofluid in der Flüssigphase 3 und mit der zweiten Anschlussleitung 8 Kryofluid in der Gasphase 4 zu entnehmen.

Der mechanische Economizer 6 weist ein erstes Ventil 9 in der ersten Anschlussleitung 7 auf, um die Entnahmemenge von Kryofluid in der Flüssigphase 3 zu regeln, und ein zweites Ventil 10 in der zweiten Anschlussleitung 8, um die Entnahmemenge von Kryofluid in der Gasphase 4 zu regeln. Im einfachsten Fall kann statt dem ersten Ventil 9 eine starre Drossel eingesetzt werden und das zweite Ventil 10 kann als einfaches Überdruckventil ausgeführt werden, das bei einem vorbestimmten Druck in der Anschlussleitung 8 gegenüber dem Atmosphärendruck auslöst. In einer anderen Ausführungsform kann der mechanische Economizer 6 über eine mit den Ventilen 9, 10 verbundene Steuereinrichtung zum Einstellen des Verhältnisses von entnommener Flüssigphase zu entnommener Gasphase verfügen, die zu diesem Zweck mit verschiedenen Messsensoren verbunden ist. Bei dem mechanischen Economizer 6 handelt es sich um ein abgeschlossenes System, in welches nicht von einem Benutzer eingegriffen wird.

In der in Entnahmerichtung nach dem mechanischen Economizer 6 befindlichen Entnahmeleitung 5 liegt somit flüssiges oder gasförmiges Kryofluid vor. Um die Entnahmeleitung 5 im Problemfall manuell zu verschließen, ist dem Economizer 6 ein manuell betätigbares mechanisches Handventil 11 nachgeordnet. Dieses ist üblicherweise neben einer Befüllkupplung des Kryobehälters 2 zugänglich.

In Entnahmerichtung nach dem manuell betätigbaren mechanischen Handventil 11 ist ein stromlos geschlossenes Ventil 12 vorgesehen, das über eine Steuerleitung mit einer Zündung des Motors M des Kraftfahrzeugs verbunden ist. Dadurch ist dieses Ventil 12 in der Regel geschlossen, wenn der Motor M nicht läuft.

Figur 2 zeigt ein erfindungsgemäßes Sicherheitsentnahmesystem 13. Der Kryobehälter 2 ist hier im Wesentlichen wie in der Ausführungsform von Figur 1 ausgebildet und lagert Kryofluid in Flüssigphase 3 und Gasphase 4, die dem Kryobehälter 2 über Anschlussleitungen 7 bzw. 8 entnommen werden können. Der Kryobehälter 2 und das Sicherheitsentnahmesystem 13 dienen demselben Zweck wie für Figur 1 beschrieben, sodass auch dieser Kryobehälter 2 insbesondere als Kraftstofftank für ein Kraftfahrzeug dienen kann, indem das im Kryobehälter 2 gelagerte Kryofluid einem Motor M als Kraftstoff zugeführt wird.

Kryofluid wird dem Kryobehälter 2 von Figur 2 über eine Entnahmeleitung 14 entnommen, wobei ein Economizer 15 zwischen dem Kryobehälter 2 und der Entnahmeleitung 14 angeordnet ist, der im Gegensatz zur Ausführungsform von Figur 1 als elektrischer Economizer 15 ausgebildet ist. Der elektrische Economizer 15 weist ein stromlos geschlossenes erstes Ventil 17 in der Anschlussleitung 7 zur Entnahme von Kryofluid in Flüssigphase 3 und ein stromlos geschlossenes zweites Ventil 16 in der Anschlussleitung 8 zur Entnahme von Kryofluid in Gasphase 4 auf.

Die beiden Ventile 16, 17 des elektrischen Economizers 15 sind wie im Stand der Technik bekannt mit einer Steuereinrichtung verbunden, welche nach Empfang von Messdaten ein optimales Verhältnis von entnommener Flüssigphase zu entnommener Gasphase bestimmt und die Ventile 16, 17 ansteuert, um diese entsprechend zu öffnen oder zu schließen. Zusätzlich sind die Ventile 16, 17 jedoch stromlos geschlossen ausgebildet und weisen einen weiteren Steuereingang auf, über welchen diese manuell über einen Not-Aus Schalter 18 betätigbar sind.

In diesem Fall kann das manuelle Absperren der Entnahmeleitung 14 somit über den Not-Aus Schalter 18 erfolgen, der den elektrischen Economizer 15 mit den hierfür vorgesehenen stromlos geschlossenen Ventilen 16, 17 ansteuert. In dieser Ausführungsform sendet der Not-Aus Schalter 18 ständig ein Signal bzw. Signale an die beiden Ventile 16, 17. Wird der Not-Aus Schalter 18 gedrückt, beispielsweise wenn ein Benutzer einen Notfall feststellt, entfällt das vom Not-Aus Schalter 18 ausgesandte Signal an beide Ventile 16, 17, sodass diese geschlossen werden. Ein manuell betätigbares mechanisches Absperrventil bzw. Handventil in der Entnahmeleitung 14 kann hierbei entfallen.

In Entnahmerichtung nach dem elektrischen Economizer 15 ist optional in der Entnahmeleitung 14 ferner ein von einer Motorzündung angesteuertes, stromlos geschlossenes Ventil 19 vorgesehen. Im Gegensatz zum Ventil 12 der Ausführungsform von Figur 1 weist dieses stromlos geschlossene Ventil 19 zwei Steuereingänge oder einen doppelt belegten Steuereingang auf, sodass das Ventil 19 einerseits von der Motorzündung und andererseits manuell über den Not-Aus Schalter 18 ansteuerbar ist. Das Ventil 19 ist derart ausgebildet, dass es geschlossen ist, wenn ein entsprechendes Signal von der Motorzündung oder vom Not-Aus Schalter 18 ausbleibt.

Der Not-Aus Schalter 18 ist somit bevorzugt über Signalleitungen 20 mit den drei stromlos geschlossenen Ventilen verbunden, nämlich mit den zwei Ventilen 16, 17 des elektrischen Economizers und mit dem stromlos geschlossenen Ventil 19 in der Entnahmeleitung, das auch von der Motorzündung angesteuert ist. Im Regelfall, wenn eine Entnahme von Kryofluid aus dem Kryobehälter 2 erlaubt bzw. erwünscht ist, sendet der Not-Aus Schalter 18 Signale an alle drei Ventile 16, 17, 19. Wird der Not-Aus Schalter 18 gedrückt, beispielsweise wenn ein Benutzer einen Notfall feststellt, entfällt das vom Not-Aus Schalter 18 ausgesandte Signal an alle drei Ventile 16, 17, 19, sodass diese geschlossen werden. Dadurch kann ein redundantes, hochsicheres Not-Aus System auch ohne manuell betätigbares mechanisches Handventil 11 wie in der Ausführungsform von Figur 1 geschaffen werden. Die Entnahmeleitung 14 bzw. das gesamte Sicherheitsentnahmesystem 13 weist somit an keiner Stelle ein manuell betätigbares mechanisches Handventil auf.

Es ist zu beachten, dass die stromlos geschlossenen Ventile 16, 17, 19 mit einer besonderen Logik ausgestattet sind. Die Ventile 16, 17 des elektrischen Economizers 15 sind immer geschlossen, wenn kein Signal vom Not-Aus Schalter 18 vorliegt. Wenn jedoch ein Signal vom Not-Aus Schalter 18 an den Ventilen 16, 17 anliegt, können diese geschlossen oder offen sein, je nach Ansteuerung durch die Steuereinrichtung des elektrischen Economizers. Das Ventil 19 ist nur geöffnet, wenn sowohl ein Signal vom Not-Aus Schalter 18 als auch von der Motorzündung an diesem anliegt. Sofern eines der beiden Signale oder beide Signale nicht am Ventil 19 vorliegt bzw. vorliegen, ist das Ventil 19 geschlossen.

Der Not-Aus Schalter 18 kann unmittelbar am Kryobehälter 2, d.h. darauf, angeordnet sein. In anderen Ausführungsformen kann der Not-Aus Schalter 18 unmittelbar neben einer Befüllkupplung, einer Druckanzeige oder einer anderen Stelle wie einer Fahrerkabine angeordnet sein. Ferner kann zusätzlich ein weiterer Not-Aus Schalter vorgesehen werden, der auch mit den stromlos geschlossenen Ventilen 16, 17, 19 verbunden ist, gegebenenfalls über einen weiteren Steuereingang. In diesem Fall werden die Ventile 16, 17, 19 jedenfalls geschlossen, wenn ein Signal des Not-Aus Schalters 18 oder ein Signal des weiteren Not-Aus Schalters ausbleibt. Der weitere Not-Aus Schalter kann beispielsweise in einer Fahrerkabine angeordnet sein.

In einigen Fällen kann vorgesehen werden, dass zusätzlich zum dargestellten Kryobehälter 2 ein weiterer Kryobehälter T2 vorgesehen wird, um dem Motor M Kryofluid als Kraftstoff zuzuführen. In praktischen Anwendungsfällen wird beispielsweise ein erster Kryobehälter 2 an der linken Seite eines Kraftfahrzeugs und ein zweiter Kryobehälter T2 an der rechten Seite eines Kraftfahrzeugs gelagert. In der Regel werden die Entnahmeleitungen der beiden Kryobehälter 2, T2 vor dem Motor M zusammengeführt, wie dies in Figur 2 durch die Anschlussleitung 21 dargestellt ist, die beispielsweise durch die Entnahmeleitung des zweiten Kryobehälters T2 verwirklicht sein kann. Somit liegt in der Entnahmeleitung 14 des ersten (dargestellten) Kryobehälters 2 ein Knotenpunkt 22 vor, an dem der dem Kryobehälter 2 zugewandte Teil der Entnahmeleitung 14 mit der Anschlussleitung 21 zum zweiten Kryobehälter T2 und dem Teil der Entnahmeleitung 14, der dem Motor M zugewandt ist, zusammenfällt.

Soll nun der erste Kryobehälter 2 durch den Not-Aus Schalter 18 vom Entnahmesystem gekoppelt werden, wird nach einem anfänglichen Druckabfall im Kryobehälter 2 ein Differenzdruck am stromlos geschlossenen Ventil 19, bzw. bei dessen Versagen an den Ventilen 16, 17, vorliegen, wobei der Druck auf der Seite des Motors M größer ist als auf der Seite des Kryobehälters 2, d.h. ein negativer Differenzdruck hinsichtlich der Entnahmerichtung. Für das stromlos geschlossene Ventil 19 ist dies üblicherweise kein Problem, da es die Entnahmeleitung 14 richtungsunabhängig sperrt. Für die stromlos geschlossenen Ventile 16, 17 des elektrischen Economizers 15 kann ein derartiger negativer Differenzdruck jedoch Probleme bereiten, da diese wie oben beschrieben in manchen Ausführungsformen als Differenzdruckventile bzw. Überdruckventile bezüglich des Atmosphärendrucks ausgebildet sind. Im Problemfall kann es beim Versagen des Ventils 19 nun dazu kommen, dass an den stromlos geschlossenen Ventilen 16, 17 des elektrischen Economizers 15 ein zu hoher negativer Differenzdruck vorliegt, sodass diese von der Motorseite aufgedrückt werden können und damit versagen.

Um eine vollständige Redundanz zu erzeugen, wird daher stromabwärts des elektrischen Economizers 15 und stromaufwärts des Knotenpunktes 22, d.h. zwischen dem Knotenpunkt 22 und dem stromlos geschossenen Ventil 19 oder zwischen dem elektrischen Economizer 15 und dem stromlos geschossenen Ventil 19, ein Rückschlagventil 23 vorgesehen, das einen Fluss von Kryofluid in Richtung des Kryobehälters 2 unterbindet.

Unabhängig von der vorgenannten Lösung ist es möglich, dass zwei Kryobehälter 2, T2 vorgesehen sind, und für jeden der Kryobehälter 2, T2 ist jeweils ein Sicherheitsentnahmesystem 13 vorgesehen, das jeweils wie oben erläutert über Anschlussleitungen 7 bzw. 8, eine Entnahmeleitung 14, einen Economizer mit stromlos geschlossenen Ventilen 16, 17 in den Anschlussleitungen 7 bzw. 8 und gegebenenfalls ein stromlos geschlossenes Ventil 19 in der Entnahmeleitung 14 verfügt. Die Entnahmeleitungen 14 der beiden Sicherheitsentnahmesysteme 13 können über eine Verbindungsleitung 21 verbunden sein, wobei dies jedoch nicht zwingend ist und die Entnahmeleitungen 14 könnte beispielsweise auch zu unterschiedlichen Motoren geführt sein. Grundsätzlich könnte ein Not-Aus Schalter 18 für eines der Sicherheitsentnahmesysteme 13 und ein weiterer Not-Aus Schalter 18 für das andere der Sicherheitsentnahmesysteme 13 vorgesehen sein. Bevorzugt ist jedoch, wenn ein einziger Not-Aus Schalter 18 vorgesehen ist, der mit beiden stromlos geschlossenen Ventilen 16, 17 beider elektrischen Economizer 15 (d.h. insgesamt mit vier Economizer-Ventilen 16, 17) verbunden und dazu ausgebildet ist, bei Betätigung die Entnahme von Kryofluid durch alle vier Ventile 16, 17 gleichzeitig zu sperren. Dieser Not-Aus Schalter 18 könnte auch mit den stromlos geschlossenen Ventilen 19 in der Entnahmeleitung 14 verbunden sein und auch diese bei Betätigung schließen. Der Not-Aus Schalter ist üblicherweise an einer Fahrzeugseite zugänglich. Damit bei einem solchen System eine Entnahme von Kryofluid aus beiden Kryobehältern von beiden Seiten des Fahrzeugs aus gestoppt werden kann, können zwei derartige Not-Aus Schalter 18 vorgesehen werden, wobei die Not-Aus Schalter 18 auf jeweils unterschiedlichen Seiten des Fahrzeugs angeordnet sind.

Alternativ oder zusätzlich zu den oben genannten Ausführungsformen könnte der Not-Aus Schalter 18 nicht bzw. nicht nur manuell betätigbar sein, sondern auch von einer Steuereinheit des Sicherheitsentnahmesystems 13 betätigbar sein, welche dazu ausgebildet ist, den Not-Aus Schalter 18 bei einem Unfall zu betätigen und dadurch im Notfall die Ventile 16, 17 des elektrischen Economizers 15 und gegebenenfalls auch das stromlos geschossene Ventil 19 gleichzeitig zu schließen. Der Not-Aus Schalter 18 könnte beispielsweise unmittelbar in der Steuereinheit integriert sein. Der Not-Aus Schalter 18 kann beispielsweise sowohl manuell betätigbar sein als auch von der Steuereinheit im Falle eines Unfalls. Gleichfalls könnten auch zwei Not-Aus Schalter 18 vorgesehen sein, wobei einer manuell betätigbar ist und der andere von einer Steuereinheit, die den Not-Aus Schalter 18 im Falle eines Unfalles ansteuert. Zur Detektion eines Unfalls könnte die Steuereinheit mit einer Elektronik des Fahrzeugs verbunden sein oder einen Sensor wie einen Beschleunigungssensor (der auf eine Kollission hindeuten könnte), einen Temperatursensor zur Detektion einer Umgebungstemperatur (die auf eine Feuer hindeuten könnte) oder einen Drucksensor zur Detektion eines Kryobehälterinnendrucks (der auf eine Fehlfunktion des Kryobehälters hindeuten könnte) aufweisen, wobei ein über bzw. unter einem Schwellwert liegender Messwert des jeweiligen Sensors einen Unfall anzeigt. Im Falle von zwei Not-Aus Schaltern 18 könnten die Ventile 16, 17, 19 beispielsweise einen zusätzlichen Steuereingang für den zusätzlichen Not-Aus Schalter 18 aufweisen.

In den vorgenannten Ausführungsformen könnte die die Steuereinheit ferner dazu ausgebildet sein, einen Betriebsmodus eines Fahrzeugs zu detektieren und eine Entnahme von Kryofluid nur dann zu ermöglichen, wenn das Fahrzeug in Betrieb ist. In anderen Worten gibt die Steuereinheit den Durchgang von Kryofluid durch den Economizer bzw. die Entnahmeleitung nur dann frei, wenn ordnungsgemäße Betriebszustandsdaten (z.B. Motortemperatur) beispielsweise von einer Fahrzeugelektronik oder von gesonderten Sensoren empfangen werden. Mit dieser Schaltung ist somit eine doppelte Absicherung der beiden Entnahmepfade (einerseits die Ventile 16 und 19 für Gas und andererseits die Ventile 17 und 19 für Flüssigkeit) möglich. Dies kann wünschenswert sein, um die besonderen Sicherheitsanforderungen für z.B. Wasserstoff zu gewährleisten.

In besonderen Ausführungsformen könnte das Rückschlagventil 23 auch einfach das manuell betätigbare mechanische Handventil 11 von Figur 1 ersetzen oder zusätzlich zu diesem eingesetzt werden, wobei auch kein Not-Aus Schalter 18 eingesetzt wird und der Economizer als elektrischer Economizer 15 oder mechanischer Economizer 6 ausgebildet sein kann, solange dessen Ventile als Überdruckventile ausgebildet und daher in Richtung des Kryobehälters aufdrückbar sind. Auch dies bringt eine erhöhte Sicherheit bzw. einen Raumgewinn durch Entfall des Handventils 11, ohne dass es im Problemfall zu einer Beschädigung der Ventile des Economizers und damit zu einem Eintritt von Kryofluid in den Kryobehälter 2 kommt. Diese Variante betrifft somit ein Sicherheitsentnahmesystem, umfassend einen Kryobehälter, eine Entnahmeleitung und einen zwischen der Entnahmeleitung und dem Kryobehälter befindlichen Economizer zur Entnahme von Kryofluid in Flüssigphase und Gasphase, wobei der Economizer mit zwei Überdruckventilen ausgebildet ist, die jeweils eine Entnahme der Flüssigphase oder der Gasphase aus dem Kryobehälter sperren können, wobei sich stromabwärts des Economizers ein Rückschlagventil in der Entnahmeleitung befindet.

## Patentansprüche

1. Sicherheitsentnahmesystem (13), umfassend einen Kryobehälter (2), eine Entnahmeleitung (14) und einen zwischen der Entnahmeleitung (14) und dem Kryobehälter (2) befindlichen Economizer (15) zur Entnahme von Kryofluid in Flüssigphase (3) und Gasphase (4),
wobei der Economizer (15) als elektrischer Economizer mit zwei ansteuerbaren Ventilen (16, 17) ausgebildet ist, die jeweils eine Entnahme der Flüssigphase (3) oder der Gasphase (4) aus dem Kryobehälter (2) sperren können,
weiters umfassend eine Steuereinrichtung zur Ansteuerung der Ventile (16, 17),
**dadurch gekennzeichnet, dass**
das System ferner einen Not-Aus Schalter (18) umfasst, welcher mit den beiden stromlos geschlossenen Ventilen (16, 17) des elektrischen Economizers (15) verbunden und dazu ausgebildet ist, bei Betätigung die Entnahme von Kryofluid durch beide Ventile (16, 17) gleichzeitig zu sperren,
wobei der Not-Aus Schalter (18) ein manuell betätigbarer Not-Aus Schalter (18) ist und/oder wobei das Sicherheitsentnahmesystem (13) ferner eine mit dem Not-Aus Schalter (18) verbundene Steuereinheit umfasst, welche dazu ausgebildet ist, einen Unfall zu detektieren und den Not-Aus Schalter (18) bei Detektion eines Unfalles zu betätigen,
wobei die Ventile (16, 17) jeweils als stromlos geschlossene Ventile (16, 17) ausgebildet sind, und
wobei die Ventile (16, 17) immer geschlossen sind, wenn kein Signal vom Not-Aus Schalter (18) vorliegt und je nach Ansteuerung durch die Steuereinrichtung geschlossen oder offen sind, wenn ein Signal vom Not-Aus Schalter (18) an den Ventilen (16, 17) anliegt.

2. Sicherheitsentnahmesystem (13) nach Anspruch 1, ferner umfassend ein von einer Motorzündung angesteuertes, stromlos geschlossenes Ventil (19) in der Entnahmeleitung (14), wobei der Not-Aus Schalter (18) sowohl mit dem von der Motorzündung angesteuerten Ventil (19) als auch mit den beiden stromlos geschlossenen Ventilen (16, 17) des elektrischen Economizers (15) verbunden und dazu ausgebildet ist, bei Betätigung die Entnahme von Kryofluid durch alle drei Ventile (16, 17, 19) gleichzeitig zu sperren.

3. Sicherheitsentnahmesystem (13) nach Anspruch 1 oder 2, wobei der Not-Aus Schalter (18) am Kryobehälter (2) oder in einer Fahrerkabine angeordnet ist.

4. Sicherheitsentnahmesystem (13) nach Anspruch 1 oder 2, wobei der Not-Aus Schalter (18) unmittelbar neben einer Befüllkupplung des Kryobehälters (2) oder einer Druckanzeige des Kryobehälters (2) angeordnet ist.

5. Sicherheitsentnahmesystem (13) nach einem der Ansprüche 1 bis 4, umfassend einen weiteren, bevorzugt in einer Fahrerkabine angeordneten Not-Aus Schalter, der mit einem von der Motorzündung angesteuerten Ventil (19) und den beiden stromlos geschlossenen Ventilen (16, 17) des elektrischen Economizers (15) verbunden und dazu ausgebildet ist, bei Betätigung die Entnahme durch alle drei Ventile (16, 17, 19) zu sperren.

6. Sicherheitsentnahmesystem (13) nach einem der Ansprüche 1 bis 5, umfassend eine Anschlussleitung (21) zu einem weiteren Kryobehälter (T2), die an der Entnahmeleitung (14) stromabwärts eines von einer Motorzündung angesteuerten, stromlos geschlossenen Ventils (19) in einem Knotenpunkt (22) anschließt, und ein Rückschlagventil (23), das stromabwärts des elektrischen Economizers (15) und stromaufwärts des Knotenpunktes (22) angeordnet ist und einen Fluss von Kryofluid in Richtung des Kryobehälters (2) unterbindet.

7. Sicherheitsentnahmesystem (13) nach einem der Ansprüche 1 bis 6, wobei die Steuereinheit dazu ausgebildet ist, einen Unfall durch Erhalt eines entsprechenden Steuersignals einer Fahrzeugelektronik und/oder durch Erhalt eines entsprechenden Sensorsignals eines mit der Steuereinheit verbundenen Sensors zu detektieren.

8. Sicherheitsentnahmesystem (13) nach Anspruch 7, wobei der Sensor ein Beschleunigungssensor, ein Temperatursensor zur Bestimmung der Umgebungstemperatur oder ein Drucksensor zur Bestimmung eines Innendrucks des Kryobehälters (2) ist und ein Unfall detektiert wird, wenn ein vom Sensor gemessener Messwert einen vorbestimmten Schwellwert überschreitet oder unterschreitet.

9. Sicherheitsentnahmesystem (13) nach einem der Ansprüche 1 bis 8, wobei die Steuereinheit ferner dazu ausgebildet ist, einen Betriebsmodus eines Fahrzeugs zu detektieren und eine Entnahme von Kryofluid nur dann zu ermöglichen, wenn das Fahrzeug in Betrieb ist und/oder wenn eine sichere Entnahme von Kryofluid gewährleistet ist.

10. Sicherheitsentnahmesystem (13) nach einem der Ansprüche 1 bis 9, umfassend einen weiteren Kryobehälter, eine weitere Entnahmeleitung und einen zwischen der weiteren Entnahmeleitung und dem weiteren Kryobehälter befindlichen weiteren elektrischen Economizer mit zwei ansteuerbaren, jeweils stromlos geschlossenen weiteren Ventilen, wobei der genannte Not-Aus Schalter (18) sowohl mit den beiden Ventilen (16, 17) des erstgenannten Economizers (15) als auch mit den beiden weiteren Ventilen des weiteren Economizers verbunden und dazu ausgebildet ist, bei Betätigung die Entnahme von Kryofluid durch alle vier Ventile (16, 17) der beiden Economizer (15) gleichzeitig zu sperren.

11. Sicherheitsentnahmesystem (13) nach Anspruch 10, ferner umfassend von einer Motorzündung angesteuerte, stromlos geschlossene Ventile (19) in der Entnahmeleitung und in der weiteren Entnahmeleitung (14), wobei der Not-Aus Schalter (18) sowohl mit den beiden von der Motorzündung angesteuerten Ventilen (19) als auch mit den vier stromlos geschlossenen Ventilen (16, 17) der elektrischen Economizers (15) verbunden und dazu ausgebildet ist, bei Betätigung die Entnahme von Kryofluid durch alle sechs Ventile (16, 17, 19) gleichzeitig zu sperren.

## Claims

1. Safety withdrawal system (13), comprising a cryogenic container (2), a withdrawal line (14) and an economizer (15) located between the withdrawal line (14) and the cryogenic container (2) for withdrawing cryogenic fluid in liquid phase (3) and gas phase (4),
wherein the economizer (15) is designed as an electric economizer with two controllable valves (16, 17), each of which can respectively block removal of the liquid phase (3) or the gas phase (4) from the cryogenic container (2),
further comprising a control device for actuating the valves (16, 17),
**characterized in that**
the system further comprises an emergency stop switch (18), which is connected to the two normally closed valves (16, 17) of the electric economizer (15) and is configured to block the removal of cryogenic fluid through both valves (16, 17) simultaneously when actuated,
wherein the emergency stop switch (18) is a manually actuated emergency stop switch (18) and/or wherein the safety removal system (13) further comprises a control unit connected to the emergency stop switch (18), which is configured to detect an accident and to actuate the emergency stop switch (18) when an accident is detected,
wherein the valves (16, 17) are each designed as normally closed valves (16, 17), and
wherein the valves (16, 17) are always closed when there is no signal from the emergency stop switch (18) and are closed or open, depending on the actuation by the control device, when a signal from the emergency stop switch (18) is present at the valves (16, 17).

2. Safety withdrawal system (13) according to claim 1, further comprising a normally closed valve (19) in the withdrawal line (14) which is actuated by an engine ignition, wherein the emergency stop switch (18) is connected both to the valve (19) actuated by the engine ignition and to the two normally closed valves (16, 17) of the electric economizer (15) and is configured to block the withdrawal of cryogenic fluid through all three valves (16, 17, 19) simultaneously when actuated.

3. Safety withdrawal system (13) according to claim 1 or 2, wherein the emergency stop switch (18) is arranged on the cryogenic container (2) or in a driver's cab.

4. Safety withdrawal system (13) according to claim 1 or 2, wherein the emergency stop switch (18) is arranged directly next to a filling coupling of the cryogenic container (2) or a pressure indicator of the cryogenic container (2).

5. Safety withdrawal system (13) according to any one of claims 1 to 4, comprising a further emergency stop switch, preferably arranged in a driver's cab, which is connected to a valve (19) controlled by the engine ignition and the two normally closed valves (16, 17) of the electric economizer (15) and is configured to block withdrawal by all three valves (16, 17, 19) when actuated.

6. Safety withdrawal system (13) according to any one of claims 1 to 5, comprising a connection line (21) to a further cryogenic container (T2), which connects to the withdrawal line (14) downstream of a normally closed valve (19) controlled by an engine ignition in a node (22), and a non-return valve (23), which is arranged downstream of the electric economizer (15) and upstream of the node (22) and prevents a flow of cryogenic fluid in the direction of the cryogenic container (2).

7. Safety withdrawal system (13) according to any one of claims 1 to 6, wherein the control unit is designed to detect an accident by receiving a corresponding control signal from a vehicle electronic system and/or by receiving a corresponding sensor signal from a sensor connected to the control unit.

8. Safety withdrawal system (13) according to claim 7, wherein the sensor is an acceleration sensor, a temperature sensor for determining the ambient temperature or a pressure sensor for determining an internal pressure of the cryogenic container (2) and an accident is detected if a measured value measured by the sensor exceeds or falls below a predetermined threshold value.

9. Safety withdrawal system (13) according to any one of claims 1 to 8, wherein the control unit is further configured to detect an operating mode of a vehicle and to enable withdrawal of cryogenic fluid only when the vehicle is in operation and/or when safe withdrawal of cryogenic fluid is ensured.

10. Safety withdrawal system (13) according to any one of claims 1 to 9, comprising a further cryogenic container, a further extraction line and a further electric economizer located between the further extraction line and the further cryogenic container and having two further controllable, normally closed valves, said emergency stop switch (18) being connected both to the two valves (16, 17) of the first-mentioned economizer (15) and to the two further valves of the further economizer and being configured to block the removal of cryogenic fluid through all four valves (16, 17) of the two economizers (15) simultaneously when actuated.

11. Safety withdrawal system (13) according to claim 10, further comprising normally closed valves (19) in the withdrawal line and in the further withdrawal line (14), wherein the emergency stop switch (18) is connected both to the two valves (19) controlled by the engine ignition and to the four normally closed valves (16, 17) of the electric economizers (15) and is configured to block the withdrawal of cryogenic fluid through all six valves (16, 17, 19) simultaneously when actuated.

## Revendications

1. Système de soutirage de sécurité (13), comprenant un récipient cryogénique (2), une conduite de soutirage (14) et un économiseur (15) situé entre la conduite de soutirage (14) et le récipient cryogénique (2) pour le soutirage de fluide cryogénique en phase liquide (3) et en phase gazeuse (4),
dans lequel l'économiseur (15) est conçu comme un économiseur électrique avec deux vannes contrôlables (16, 17), chacune d'elles pouvant bloquer le soutirage de la phase liquide (3) ou de la phase gazeuse (4) du récipient cryogénique (2),
comprenant en outre un dispositif de commande pour contrôler les vannes (16, 17), **caractérisé en ce que**
le système comprend en outre un interrupteur d'arrêt d'urgence (18) qui est relié aux deux vannes normalement fermées (16, 17) de l'économiseur électrique (15) et qui est conçu, lorsqu'il est actionné, pour bloquer le soutirage de fluide cryogénique à travers les deux vannes (16, 17) simultanément,
dans lequel l'interrupteur d'arrêt d'urgence (18) est un interrupteur d'arrêt d'urgence actionnable manuellement (18) et/ou dans lequel le système de soutirage de sécurité (13) comprend en outre une unité de commande qui est reliée à l'interrupteur d'arrêt d'urgence (18) et qui est conçue pour détecter un accident et pour actionner l'interrupteur d'arrêt d'urgence (18) lors de la détection d'un accident,
dans lequel les vannes (16, 17) sont chacune conçues comme des vannes normalement fermées (16, 17), et
dans lequel les vannes (16, 17) sont toujours fermées lorsqu'il n'y a pas de signal provenant de l'interrupteur d'arrêt d'urgence (18) et sont fermées ou ouvertes en fonction du pilotage par le dispositif de commande lorsqu'un signal provenant de l'interrupteur d'arrêt d'urgence (18) est appliqué aux vannes (16, 17).

2. Système de soutirage de sécurité (13) selon la revendication 1, comprenant en outre une vanne normalement fermée (19) qui est dans la conduite de soutirage (14) et qui est contrôlée par un allumage du moteur, dans lequel l'interrupteur d'arrêt d'urgence (18) est relié non seulement à la vanne (19) contrôlée par l'allumage du moteur, mais aussi aux deux vannes normalement fermées (16, 17) de l'économiseur électrique (15), et est conçu, lorsqu'il est actionné, pour bloquer le soutirage de fluide cryogénique à travers toutes les trois vannes (16, 17, 19) simultanément.

3. Système de soutirage de sécurité (13) selon la revendication 1 ou 2, dans lequel l'interrupteur d'arrêt d'urgence (18) est disposé sur le récipient cryogénique (2) ou dans une cabine du conducteur.

4. Système de soutirage de sécurité (13) selon la revendication 1 ou 2, dans lequel l'interrupteur d'arrêt d'urgence (18) est disposé directement à côté d'un raccord de remplissage du récipient cryogénique (2) ou d'un indicateur de pression du récipient cryogénique (2).

5. Système de soutirage de sécurité (13) selon l'une des revendications 1 à 4, comprenant un autre interrupteur d'arrêt d'urgence qui est disposé de préférence dans une cabine du conducteur et qui est relié à une vanne (19) contrôlée par l'allumage du moteur et aux deux vannes normalement fermées (16, 17) de l'économiseur électrique (15) et qui est conçu, lorsqu'il est actionné, pour bloquer le soutirage à travers toutes les trois vannes (16, 17, 19).

6. Système de soutirage de sécurité (13) selon l'une des revendications 1 à 5, comprenant une conduite de raccordement (21) vers un autre récipient cryogénique (T2), qui se raccorde à la conduite de soutirage (14) en aval d'une vanne normalement fermée (19) et contrôlée par un allumage du moteur au niveau d'un noeud (22), et un clapet antiretour (23) qui est disposé en aval de l'économiseur électrique (15) et en amont du noeud (22) et qui empêche un écoulement de fluide cryogénique en direction du récipient cryogénique (2).

7. Système de soutirage de sécurité (13) selon l'une des revendications 1 à 6, dans lequel l'unité de commande est conçue pour détecter un accident en recevant un signal de commande correspondant d'un système électronique du véhicule et/ou en recevant un signal de capteur correspondant d'un capteur relié à l'unité de commande.

8. Système de soutirage de sécurité (13) selon la revendication 7, dans lequel le capteur est un capteur d'accélération, un capteur de température pour déterminer la température ambiante ou un capteur de pression pour déterminer une pression intérieure du récipient cryogénique (2) et un accident est détecté lorsqu'une valeur mesurée par le capteur dépasse ou tombe en dessous d'une valeur de seuil prédéterminée.

9. Système de soutirage de sécurité (13) selon l'une des revendications 1 à 8, dans lequel l'unité de commande est en outre conçue pour détecter un mode de fonctionnement d'un véhicule et pour permettre un soutirage de fluide cryogénique uniquement si le véhicule est en fonctionnement et/ou si un soutirage sécurisé de fluide cryogénique est assuré.

10. Système de soutirage de sécurité (13) selon l'une des revendications 1 à 9, comprenant un autre récipient cryogénique, une autre conduite de soutirage et un autre économiseur électrique situé entre l'autre conduite de soutirage et l'autre récipient cryogénique avec deux autres vannes contrôlables, chacune étant normalement fermées, dans lequel ledit interrupteur d'arrêt d'urgence (18) est relié non seulement aux deux vannes (16, 17) du premier économiseur (15) mentionné, mais aussi aux deux autres vannes de l'autre économiseur, et est conçu, lorsqu'il est actionné, pour bloquer le soutirage de fluide cryogénique à travers toutes les quatre vannes (16, 17) des deux économiseurs (15) simultanément.

11. Système de soutirage de sécurité (13) selon la revendication 10, comprenant en outre des vannes normalement fermées (19) qui sont dans la conduite de soutirage et dans l'autre conduite de soutirage (14) et qui sont contrôlées par un allumage du moteur, dans lequel l'interrupteur d'arrêt d'urgence (18) est relié non seulement aux deux vannes (19) contrôlées par l'allumage du moteur, mais aussi aux quatre vannes normalement fermées (16, 17) des économiseurs électriques (15), et est conçu, lorsqu'il est actionné, pour bloquer le soutirage de fluide cryogénique à travers toutes les six vannes (16, 17, 19) simultanément.
